# EUROPÄISCHE PATENTSCHRIFT

(11) **EP 2 301 140 B1**
(45) Veröffentlichungstag und Bekanntmachung des Hinweises auf die Patenterteilung: **05.09.2018**
(21) Anmeldenummer: 08801493.1
(22) Anmeldetag: 22.07.2008
(51) Int. Cl.: H02K 21/16, H02K 1/27

(54) **PERMANENTERREGTE SYNCHRONMASCHINE**
PERMANENTLY EXCITED SYNCHRONOUS MACHINE
MACHINE SYNCHRONE À AIMANTS PERMANENTS

(43) Veröffentlichungstag der Anmeldung: 30.03.2011
(73) Patentinhaber: Multibrid GmbH, 27572 Bremerhaven (DE)
(72) Erfinder: HEMEAD, Elsayed, verstorben (DE); LEHNHOFF, Martin, 24678 Rendsburg (DE); SCHULZ, Detlef, 22043 Hamburg (DE)
(74) Vertreter: Rothkopf, Ferdinand
(86) Internationale Anmeldenummer: PCT/EP2008/005993
(87) Internationale Veröffentlichungsnummer: WO 2010/009742

(56) Entgegenhaltungen:
- EP-A- 0 780 954
- WO-A-2008/046780
- DE-A1- 3 730 615
- US-A1- 2007 138 891

## Beschreibung

### Hintergrund der Erfindung

Die Erfindung betrifft eine permanenterregte Synchronmaschine, die einen Stator mit einer Vielzahl elektromagnetischer Pole und einen Rotor mit mehreren Permanentmagnetpolen umfasst. Insbesondere betrifft die Erfindung einen Windenergieanlagen-Synchrongenerator bzw. die Verwendung eines Synchrongenerators an einer Windenergieanlage.

Synchronmaschinen sind elektromechanische Wandler, die als Elektromotor mit Strom betrieben werden oder als Generator Strom erzeugen. Es gibt Drehstrom- oder Einphasen-Synchronmaschinen, die je mindestens eine Statorwicklung (meist außen) aufweisen, in der ein magnetisches Drehfeld erzeugt bzw. in welcher eine elektrische Spannung induziert wird. Der Rotor (meist innen) trägt zur Felderzeugung permanenterregte Magnete. Derartige Synchronmaschinen sind permanenterregte Drehfeldmaschinen, bei denen die Drehzahl gleich der Wechselspannungsfrequenz, geteilt durch die Polpaarzahl des Rotors, ist. Die Drehzahl des Läufers ist also gleich der Drehzahl des elektromagnetischen Drehfeldes. Der Rotor rotiert synchron zum Drehfeld. Um eine Synchronmaschine bei verschiedenen Drehzahlen betreiben zu können, ist ein Frequenzumrichter bzw. ein Wechselrichter erforderlich.

Die Wirkleistung derartiger Synchronmaschinen wird vom Polradwinkel festgelegt, der sich als Verdrehwinkel zwischen dem Rotor der belasteten Synchronmaschine und dem Rotor der unbelasteten Synchronmaschine ergibt.

Gattungsgemäße Synchronmaschinen werden derzeit vor allem als Wechsel- und Drehstrom-Generatoren in Kraftwerken eingesetzt. Synchrongeneratoren anderer Bauart werden aber z.B. auch in Kraftfahrzeugen als Lichtmaschinen eingesetzt. Dabei wurden bisher am Rotor zur Felderzeugung als permanenterregte Magnete für Generatoren mit geringer Leistung (Watt- und Kilo-Watt-Bereich) Permanentmagnete verwendet (Selbsterregung), wohingegen am Rotor von Generatoren hoher Leistung (Mega-Watt-Bereich) Elektromagneten verwendet wurden (Fremderregung).

Windenergieanlagen werden oftmals mit Asynchronmaschinen in vierpoliger Ausführung ausgerüstet. Diese weisen hohe Drehzahlen auf. Zur Drehzahlanpassung ist daher ein Getriebe zwischen der Rotorblattachse und dem Generator erforderlich, wodurch die Konstruktion anfällig für Getriebe- und Lagerverschleiß ist. Getriebelose, langsam drehende Generatoren erfordern hingegen eine höhere Polzahl und damit einen größeren Durchmesser sowie höheres Gewicht. Insbesondere das Gewicht ist bei Windenergieanlagen jedoch ein wichtiger Auslegungsfaktor.

Aus DE 37 30 615 A1 ist eine rotierende elektrische Maschine mit Permanentmagnet-Erregung bekannt, bei der ein bewickelter Anker und relativ zum Anker beweglich angeordnete, als Rotor dienende Permanentmagnete vorgesehen sind. Zudem sind zwischen den Polflächen eines Polpaares entlang eines zugehörigen Luftspalts verlaufend nebeneinander mehrere Einzelmagnete angeordnet. Die Einzelmagnete haben Magnetisierungsvektoren, die in einem Winkel gegeneinander derart angestellt sind, dass an der den Polflächen abgewandten Seite der Einzelmagnete das Feld verdrängt und im Wesentlichen direkt über benachbarte Einzelmagnete geschlossen ist. Die Einzelmagnete können dabei segmentartig gestaltet sein und einen geschlossenen Ring aufbauen. Insgesamt kann damit ein nahezu sinusförmiger Induktionsverlauf erreicht werden, wobei der Maximalwert über der Remanenz liegt. Der Maximalwert kann mit stärkeren Magneten weiter erhöht werden.

Aus US 2007 / 0 138 891 A1 ist eine Rotoreinheit für einen Motor bekannt, die einen Rotorkern mit einer äußeren Oberfläche umfasst, an der mehrere Magnete eingreifen. Ferner ist eine Aluminiumhülse vorgesehen, die mit entsprechenden Rippen dazu angepasst ist, die Magnete und den Rotorkern passgenau aufzunehmen.

Aus WO 2008 / 046 780 A2 ist ein Generator einer Windkraftanlage bekannt, der als permanenterregte elektrische Maschine einen Rotor aufweist, an dem einfach austauschbare Magnetmodule montiert werden können. Dazu ist das einzelne Magnetmodul mit einer Trägerplatte zum Befestigen an dem Rotor und mindestens einem auf der Trägerplatte angeordneten Permanentmagneten gestaltet. Ferner ist eine Abdeckeinrichtung vorgesehen, mit der der mindestens eine Permanentmagnet auf der Trägerplatte derart befestigt ist, dass der Permanentmagnet sich zwischen der Trägerplatte und der Abdeckeinrichtung befindet.

Aus EP 0 780 954 A1 ist eine permanenterregte Synchronmaschine mit einem Spiralwicklungen aufweisenden Stator und einem Rotor mit umfänglich angeordneten Permanentmagneten bekannt. Dabei hat der Rotor eine vorgegebene Anzahl an Polteilen. Zwischen zwei benachbarten Polteilen ist mindestens ein radial oder axial magnetisierter Permanentmagnet vorgesehen. Der einzelne Permanentmagnet hat eine radiale Wand, die von einer angrenzenden radialen Wand des Polteils einen vordefinierten Abstand aufweist, mit dem ein Entmagnetisierungsrisiko des Permanentmagneten in Gegenwart eines maximalen Stromes vermieden werden kann.

### Zugrundeliegende Aufgabe

Der Erfindung liegt die Aufgabe zugrunde, eine permanenterregte Synchronmaschine zu schaffen, die bei vergleichsweise geringen Herstellungskosten eine hohe Leistung bereitstellen kann, betriebssicher arbeitet und dabei einen hohen Wirkungsgrad aufweist.

### Erfindungsgemäße Lösung

Diese Aufgabe ist erfindungsgemäß mit einer permanenterregten Synchronmaschine gemäß Anspruch 1 gelöst. Vorteilhafte Weiterbildungen der Erfindung sind in den abhängigen Ansprüchen beschrieben.

Bei der erfindungsgemäßen permanenterregten Synchronmaschine sind ein Stator mit einer Vielzahl elektromagnetischer Pole und ein Rotor mit mehreren Permanentmagnetpolen vorgesehen. Ferner ist mindestens einer der Permanentmagnetpole des Rotors aus separaten Permanentmagnetsegmenten gebildet, die bei ihrer Herstellung mit einer besonders hohen Feldstärke versehen worden sind und die an dem mindestens einen Permanentmagnetpol in Umfangsrichtung derart nebeneinander angeordnet sind, dass sich bei Drehung des Rotors in den elektromagnetischen Polen des Stators eine sinusförmige Erregung ergibt.

Mit der erfindungsgemäßen Lösung ist eine einfach herstellbare Synchronmaschine geschaffen, die eine hohe Leistung bei zugleich geringen Wirbelstromverlusten und einem hohen Wirkungsgrad aufweist. Dies hat nicht nur auf die Herstellungskosten und die Gesamtenergiebilanz der erfindungsgemäßen Synchronmaschine positive Auswirkung, sondern auch auf nachgeschaltete Arbeitsprozesse, wie das Umrichten der erzeugten Wechselspannung. So muss insbesondere in Kombination mit der erfindungsgemäßen Synchronmaschine ein nachgelagerter Wechselrichter nur eine vergleichsweise kleine Reserveleistung aufweisen.

Die Flussdichten der erfindungsgemäßen Permanentmagneten betragen bevorzugt zwischen 0,9 Tesla und 1,7 Tesla, bevorzugt zwischen 1,1 Tesla und 1,5 Tesla, am bevorzugtesten 1,3 Tesla. Die maximalen magnetischen Feldstärken belaufen sich auf 2000 kA/m bis 2700 kA/m, bevorzugt auf 2200 kA/m bis 2500 kA/m, am bevorzugtesten 2350 kA/m. Die Permanentmagneten sind dabei vorteilhaft aus Neodynium-Eisen-Bor (Nd-Fe-B) hergestellt.

Die erfindungsgemäße Lösung nutzt ferner die Erkenntnis, dass eine Permanentmagneterregung im Vergleich zu einer elektrischen Erregung eine um ca. 30 % kleinere, leichtere und damit auch kostengünstigere Bauweise erlaubt, was sich bei Windenergieanlagen im Hinblick auf die oben erwähnten Gewichtsaspekte besonders günstig auswirkt.

Bei der erfindungsgemäßen permanenterregten Synchronmaschine sind die nebeneinander angeordneten Permanentmagnetsegmente des mindestens einen Permanentmagnetpols für das Erzeugen der sinusförmigen Erregung mit unterschiedlicher Größe gestaltet. Die unterschiedliche Größe der Permanentmagnetsegmente erlaubt es, mit ein und demselben Magnetisierungsverfahren Magnete mit unterschiedlicher Feldstärke bereitzustellen, die nachfolgend am Rotor so angeordnet werden, dass sich eine (gegebenenfalls gestufte) Kurve für die Feldstärke ergibt, die bei Drehung des Rotors in den elektromagnetischen Polen des Stators eine sinusförmige Erregung ergibt.

Die derartig gestalteten Permanentmagnetsegmente sind besonders bevorzugt plattenförmig gestaltet und weisen insbesondere unterschiedliche Höhen auf. Solche Permanentmagnetsegmente können, da sie die Grundform eines einfachen Quaders haben, mit besonders geringem Fertigungsaufwand hergestellt werden.

Die Stufung der Permanentmagnetsegmente erfolgt bevorzugt entlang einer Sinuskurve, die für die Querschnittsform der nebeneinander angeordneten Permanentmagnetsegmente die Basiskurve bildet. An dieser Basiskurve wird an der einzelnen Stufe eine zeitliche Mittelwertbildung durchgeführt. Es wird dabei gemittelt, wie hoch das Permanentmagnetsegment ausgebildet sein muss, damit es im Querschnitt als Rechtecksfläche den Flächeninhalt des Flächenintervalls der Sinuskurve abdeckt.

Bei einer ersten vorteilhaften Weiterbildung der erfindungsgemäßen permanenterregten Synchronmaschine sind die nebeneinander angeordneten Permanentmagnetsegmente des mindestens einen Permanentmagnetpols für das Erzeugen der sinusförmigen Erregung mit einer im Querschnitt sinusförmigen Außenkontur gestaltet. Als Außenkontur wird hier jener Teil der Kontur des Querschnitts bezeichnet, der radial nach außen gerichtet ist. Derart gestaltete, nebeneinander angeordnete Permanentmagnetsegmente führen, bei sich für den Gesamtmagnetpol vertretbarem Fertigungsaufwand, zu einer abschnittsweisen Magnetpolform, die eine besonders genau sinusförmige Spannung induziert.

Besonders vorteilhaft ist der gesamte Permanentmagnetpol außenseitig in seiner Kontur sinusförmig gestaltet. Diese Sinusform kann mittels der erfindungsgemäßen Reihung von besonders stark magnetisierten und als einzelne Bauelemente hergestellten Permanentmagnetsegmenten kostengünstig gestaltet werden. Zugleich führen derartige Permanentmagnetpole zu einer besonders starken und zugleich besonders genau sinusförmigen Erregung. Diese Erregung wird zugleich mit besonders geringen Wirbelstromverlusten bereitgestellt.

Bei einer zweiten vorteilhaften Weiterbildung der erfindungsgemäßen permanenterregten Synchronmaschine ist der mindestens eine Permanentmagnetpol mit vier bis sechs einzelnen Permanentmagnetsegmenten gestaltet. Grundsätzlich ist es so, dass je höher die Anzahl an Permanentmagnetsegmenten pro Permanentmagnetpol ist, umso besser kann bei einer gestuften Permanentmagnetsegmentanordnung die Sinusform nachgebildet werden.

Um mit vergleichsweise geringem Fertigungsaufwand einen effizient arbeitenden Permanentmagnetpol zu gestalten, ist erfindungsgemäß ermittelt worden, dass dieser vier bis sechs einzelne Permanentmagnetsegmente aufweisen sollte.

Bei einer dritten vorteilhaften Weiterbildung der erfindungsgemäßen permanenterregten Synchronmaschine überdecken die Permanentmagnetsegmente des mindestens einen Permanentmagnetpols am Umfang des Rotors nur einen Bereich von zwischen 70 % und 95 % der sich durch die Polteilung für diesen Permanentmagnetpol ergebenden Umfangsstrecke. Mit einem derartigen Permanentmagnetpol ergibt sich innerhalb der einzelnen Polteilung ein verbleibender freier bzw. restlicher Bereich, der als Übergangsbereich zwischen den Permanentmagnetpolen freien Platz bietet. Der Übergangsbereich kann als Toleranzausgleich zwischen den Anordnungen der Permanentmagnetsegmente an den einzelnen Permanentmagnetpolen dienen. Dadurch verringert sich insgesamt der Fertigungsaufwand für das lagegenaue Platzieren der erfindungsgemäß einzeln nebeneinander angeordneten Permanentmagnetsegmente. Ferner bietet dieser restliche Bereich auch Platz für weitere Elemente, wie z.B. Schrauben oder Klemmen, die zum ortsfesten Anbringen der Permanentmagnetsegmente dienen können. Diese Art der Anordnung führt ferner zu einer guten Wärmeverteilung im Ständer der erfindungsgemäßen Synchronmaschine.

Bei einer vierten vorteilhaften Weiterbildung der erfindungsgemäßen permanenterregten Synchronmaschine sind die Permanentmagnetsegmente des mindestens einen Permanentmagnetpols auf einer Montageplatte ortsfest angebracht, die ihrerseits mit dem Rotor ortsfest verbunden ist. Eine derartige Montageplatte ermöglicht eine präzise Fertigung der einzelnen Permanentmagnetpole als separate Baugruppen. Diese Baugruppen können unabhängig von einer restlichen Fertigung in einer Vormontage hergestellt und als solche einer Qualitätskontrolle unterzogen werden.

Bei einer fünften vorteilhaften Weiterbildung der erfindungsgemäßen permanenterregten Synchronmaschine ist die Montageplatte am Rotor angeklebt. Das derartige Verkleben ist eine besonders einfache, kostengünstige und zugleich prozesssichere Art der Montage.

Als Schrauben werden bevorzugt solche aus unmagnetischem Material, insbesondere aus Aluminium, verwendet. Derartiges Material schließt jeglichen Einfluss auf die Erregung am Stator aus.

Bei einer sechsten vorteilhaften Weiterbildung der erfindungsgemäßen permanenterregten Synchronmaschine sind die Permanentmagnetsegmente des mindestens einen Permanentmagnetpols außenseitig bzw. radial außen abgedeckt. Die derartige Abdeckung bietet nicht nur einen Schutz gegen Korrosion, sondern zugleich auch einen Schutz vor Absplitterungen von Material der Permanentmagnetsegmente.

Die Abdeckung ist vorteilhaft aus einem unmagnetischen Material gestaltet, insbesondere aus Kunststoff. Solches Material hat ebenfalls keinen Einfluss auf die Erregung am Stator und ist zugleich preiswert. Die Abdeckung wird bevorzugt zusammen mit der oben genannten Montageplatte verschraubt. Es kann so eine besonders einfache, kostengünstige und zugleich lagegenaue Montage sowohl von der Montageplatte (und damit der Permanentmagnetsegmente) als auch der Abdeckung erzielt werden.

Bei einer siebten vorteilhaften Weiterbildung der erfindungsgemäßen permanenterregten Synchronmaschine sind die Permanentmagnetsegmente des mindestens einen Permanentmagnetpols am Rotor, insbesondere an der Montageplatte, aufgeklebt. Mittels Kleben sind bei diesem Fertigungsschritt des Anbringens der Permanentmagnetsegmente am Rotor alle Voraussetzungen einer dauerhaft ortsfesten und lagegenauen Positionierung erreicht.

Bevorzugt wird zum Kleben sowohl der Montageplatte als auch der Permanentmagnetsegmente ein Zweikomponenten-Kleber verwendet, der besonders hohe Haltekräfte gewährleistet.

Bei einer achten vorteilhaften Weiterbildung der erfindungsgemäßen permanenterregten Synchronmaschine sind am Umfang von Stator und Rotor derart viele elektromagnetische Pole bzw. derart viele Permanentmagnetpole ausgebildet, dass diese keinen gemeinsamen Teiler haben. Mit einer derartigen Gestaltung können besonders geringe Rastmomente erzielt werden.

Vorteilhaft werden 39 elektromagnetische Pole mit je 6 Wicklungskreisen sowie 4 Permanentmagnetpole vorgesehen. Diese ergeben ein Verhältnis von 234 zu 24, bei dem sich die oben genannten geringen Rastmomente und besonders geringe Geräusch-Emissionen ergeben. Ferner sinkt die Spannung bei Belastung weniger ab und die erfindungsgemäße Synchronmaschine weist im gesamten Betriebsbereich einen besonders guten Leistungsfaktor auf.

### Kurzbeschreibunq der Zeichnungen

Nachfolgend wird ein Ausführungsbeispiel der erfindungsgemäßen Lösung anhand der beigefügten schematischen Zeichnungen näher erläutert. Es zeigt:
- Fig. 1: einen abschnittsweisen Querschnitt eines Permanentmagnetpols am Rotor eines ersten Ausführungsbeispiels einer erfindungsgemäßen permanenterregten Synchronmaschine,
- Fig. 2: eine erste graphische Abbildung zur Erläuterung der Abstufung von Permanentmagnetsegmenten am Permanentmagnetpol gemäß Fig. 1,
- Fig. 3: eine zweite graphische Abbildung zur Erläuterung der Abstufung von Permanentmagnetsegmenten am Permanentmagnetpol gemäß Fig. 1 und
- Fig. 4: einen abschnittsweisen Querschnitt eines Permanentmagnetpols am Rotor eines zweiten Ausführungsbeispiels einer erfindungsgemäßen permanenterregten Synchronmaschine.

### Detaillierte Beschreibung des Ausführungsbeispiels

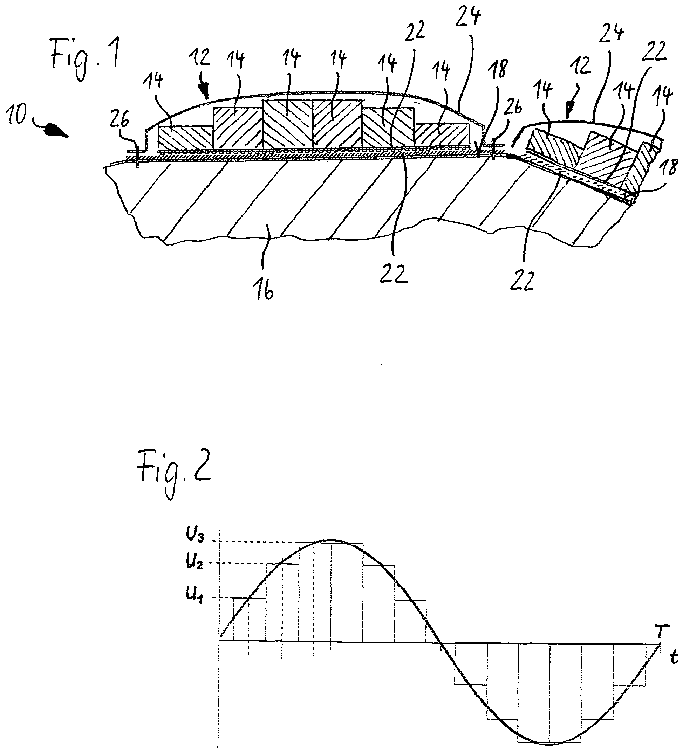

In Fig. 1 ist abschnittsweise ein Rotor 10 einer weiter nicht veranschaulichten permanenterregten Synchronmaschine dargestellt. Der Rotor 10 ist dabei außen von einem Stator der Synchronmaschine umgeben.

Am Rotor 10 sind mehrere Permanentmagnetpole 12 ausgebildet, von denen in Fig. 2 zwei Stück zu sehen sind. Es liegen jeweils entgegengesetzt orientierte magnetische Nord- und Südpole nebeneinander.

Die Permanentmagnetpole 12 sind jeweils aus mehreren Permanentmagnetsegmenten 14 zusammengesetzt, die bei ihrer Herstellung einzeln mit einer Feldstärke von 2350 kA/m versehen worden sind und nachfolgend derart nebeneinander angeordnet worden sind, dass sie gemeinsam einen Permanentmagnetpol 12 bilden, der beim Drehen des Rotors 10 in elektromagnetischen Polen des Stators eine sinusförmige Erregung ergibt. Die dabei in zugehörigen Statorwicklungen induzierte Spannung Uᵢ errechnet sich mit der Drehzahl n, der Konstanten k und dem magnetischen Fluss F mittels der Formel Uᵢ = k * F * n.

Um die genannte sinusförmige Erregung zu erreichen, sind die nebeneinander angeordneten Permanentmagnetsegmente 14 derart gestuft ausgebildet, dass sie gemeinsam einen Magnetpol bilden, der insgesamt eine sinusförmige Gestalt aufweist. Die Permanentmagnetsegmente 14 sind also zusammen betrachtet sinusförmig gestaltet. Zur Begrenzung des Fertigungsaufwandes ist vorliegend der einzelne Permanentmagnetpol 12 mit sechs Permanentmagnetsegmenten 14 gestaltet. Diese sechs Permanentmagnetsegmente 14 führen gemäß Fig. 2 am Stator zu einer Spannung mit drei gestuften Werten U₁, U₂ und U₃ über der Zeit t. Ferner hat die Spannung eine Gesamtperiode T, welche durch das Durchlaufen der beiden Spannungshalbschwingungen gekennzeichnet ist. Die Periodendauer der einzelnen Teilspannungen je Permanentmagnetsegment 14 innerhalb der beiden Spannungshalbschwingungen beträgt T / 14. Die Zahl 14 ergibt sich als Summe aus zwei mal sechs Permanentmagnetsegmenten und zwei Spannungsnullwerten. Die Spannungsnullwerte entstehen dadurch, dass die Permanentmagnetsegmente 14 jeweils nur ca. 86 % der sich durch die Polteilung für die einzelnen Permanentmagnetpole 12 ergebenden Umfangsstrecke überdecken. Die verbleibenden 14 % bilden zwei Restbereiche, die als Toleranzausgleich zwischen benachbarten Permanentmagnetpolen 12 und, wie nachfolgend noch erläutert wird, zur Befestigung der Permanentmagnetsegmente 14 am Rotor 10 dienen. Die Polteilung ergibt sich rechnerisch aus dem Durchmesser des Rotors 10 und der Polpaarzahl.

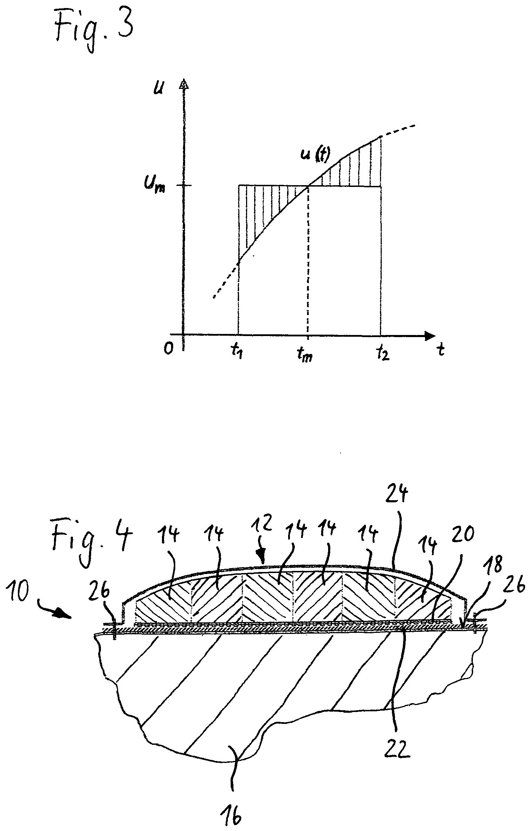

Die Größe bzw. die Höhe der einzelnen, plattenförmigen Permanentmagnetsegmente 14 gemäß Fig. 1 wird durch eine zeitliche Mittelwertbildung an dem angestrebten sinusförmigen Verlauf der Spannung ermittelt. Diese Mittelwertbildung ist in Fig. 3 für ein einzelnes Permanentmagnetsegment 14 veranschaulicht.

Dabei wird die Funktion u(t) der induzierten Spannung mit einem Rechtecksimpuls der Pulsdauer t = t₂ - t₁ nachgebildet. Für den Mittelwert Uₘ der Spannung ergibt sich, dass die sich aus dem Mittelwert Uₘ und der Pulsdauer t ergebende Rechtecksfläche gleich der Integralfläche unter der Funktion u(t) innerhalb dieser Pulsdauer t ist. Damit der Mittelwert richtig abgebildet ist, müssen die schraffierten Flächen in Fig. 3 gleich groß sein.

Die genannte Mittelwertbildung findet an jedem Permanentmagnetsegment 14 statt. Die zeitliche Aneinanderreihung der Mittelwerte Uₘ führt genähert zu der gewünschten sinusförmigen Spannungsausprägung.

In Fig. 4 ist ein Ausführungsbeispiel von Permanentmagnetsegmenten 14 dargestellt, welche zur Verfeinerung der gewünscht sinusförmigen Erregung mit einer im Querschnitt sinusförmigen Außenkontur gestaltet sind.

Die Permanentmagnetsegmente 14 sind bei beiden Ausführungsbeispielen (Fig. 1 und Fig. 4) in besonderer Weise an dem Rotor 10 ortsfest angebracht. Dazu sind an einer zum Rotor 10 gehörenden Welle 16 über deren Umfang im Verhältnis der Polteilung verteilt Abflachungen 18 ausgebildet. Die Permanentmagnetsegmente 14 sind in der gewünschten Formanordnung nebeneinander auf einer zugehörenden Montageplatte 20 aufgeklebt. Die Montageplatte 20 ist ihrerseits an einer zugehörenden Abflachung 18 mittels einer Kleberschicht 22 aus Zweikomponenten-Kleber ortsfest angebracht.

Über die derart ortsfest angebrachten Permanentmagnetsegmente 14 ist an jedem einzelnen Permanentmagnetpol 12 eine Abdeckung 24 aus Kunststoff gestülpt, die an den oben genannten freien Bereichen mittels Aluminium-Schrauben 26 befestigt ist.

Abschließend sei angemerkt, dass sämtlichen Merkmalen, die in den Anmeldungsunterlagen und insbesondere in den abhängigen Ansprüchen genannt sind, trotz des vorgenommenen formalen Rückbezugs auf einen oder mehrere bestimmte Ansprüche, auch einzeln oder in beliebiger Kombination eigenständiger Schutz zukommen soll.

### Bezugszeichenliste

- 10: Rotor
- 12: Permanentmagnetpol
- 14: Permanentmagnetsegment
- 16: Welle
- 18: Abflachung
- 20: Montageplatte
- 22: Kleberschicht
- 24: Abdeckung
- 26: Schraube

## Patentansprüche

1. Permanenterregte Synchronmaschine, die einen Stator mit einer Vielzahl elektromagnetischer Pole und einen Rotor (10) mit mehreren Permanentmagnetpolen (12) umfasst,
wobei mindestens einer der Permanentmagnetpole (12) des Rotors (10) aus separaten Permanentmagnetsegmenten (14) gebildet ist, die bei ihrer Herstellung mit einer besonders hohen Feldstärke versehen worden sind und die an dem mindestens einen Permanentmagnetpol (12) in Umfangsrichtung derart nebeneinander angeordnet sind, dass sich bei Drehung des Rotors (10) in den elektromagnetischen Polen des Stators eine sinusförmige Erregung ergibt,
**dadurch gekennzeichnet, dass** die nebeneinander angeordneten Permanentmagnetsegmente (14) des mindestens einen Permanentmagnetpols (12) für das Erzeugen der sinusförmigen Erregung mit unterschiedlicher Größe gestaltet sind.

2. Permanenterregte Synchronmaschine nach Anspruch 1,
**dadurch gekennzeichnet, dass** die nebeneinander angeordneten Permanentmagnetsegmente (14) des mindestens einen Permanentmagnetpols (12) für das Erzeugen der sinusförmigen Erregung mit einer im Querschnitt sinusförmigen Außenkontur gestaltet sind.

3. Permanenterregte Synchronmaschine nach Anspruch 1 oder 2,
**dadurch gekennzeichnet, dass** der mindestens eine Permanentmagnetpol (12) mit vier bis sechs einzelnen Permanentmagnetsegmenten (14) gestaltet ist.

4. Permanenterregte Synchronmaschine nach Anspruch 1,
**dadurch gekennzeichnet, dass** die Permanentmagnetsegmente (14) des mindestens einen Permanentmagnetpols (12) am Umfang des Rotors (10) nur einen Bereich von zwischen 70 % und 95 % der sich durch die Polteilung für diesen Permanentmagnetpol (12) ergebenden Umfangsstrecke überdecken.

5. Permanenterregte Synchronmaschine nach einem der Ansprüche 1 bis 4,
**dadurch gekennzeichnet, dass** die Permanentmagnetsegmente (14) des mindestens einen Permanentmagnetpols (12) auf einer Montageplatte (20) ortsfest angebracht sind, die ihrerseits mit dem Rotor (10) ortsfest verbunden ist.

6. Permanenterregte Synchronmaschine nach Anspruch 5,
**dadurch gekennzeichnet, dass** die Montageplatte (20) am Rotor (10) angeklebt ist.

7. Permanenterregte Synchronmaschine nach einem der Ansprüche 1 bis 6,
**dadurch gekennzeichnet, dass** die Permanentmagnetsegmente (14) des mindestens einen Permanentmagnetpols (12) außenseitig abgedeckt sind.

8. Permanenterregte Synchronmaschine nach einem der Ansprüche 1 bis 7,
**dadurch gekennzeichnet, dass** die Permanentmagnetsegmente (14) des mindestens einen Permanentmagnetpols (12) am Rotor (10), insbesondere an der Montageplatte (20), aufgeklebt sind.

9. Permanenterregte Synchronmaschine nach einem der Ansprüche 1 bis 8,
**dadurch gekennzeichnet, dass** am Umfang von Stator und Rotor (10) derart viele elektromagnetische Pole bzw. derart viele Permanentmagnetpole (12) ausgebildet sind, dass diese keinen gemeinsamen Teiler haben.

## Claims

1. Permanently excited synchronous machine which comprises a stator with a large number of electromagnetic poles and a rotor (10) with a plurality of permanent magnetic poles (12),
wherein at least one of the permanent magnetic poles (12) of the rotor (10) is formed from separate permanent magnetic segments (14) which during their production have been provided with a particularly high field strength and which are arranged on the at least one permanent magnetic pole (12) in the circumferential direction next to one another such that on rotation of the rotor (10) in the electromagnetic poles of the stator a sinusoidal excitation results,
**characterised in that** the permanent magnetic poles (14) arranged next to one another of the at least one permanent magnetic pole (12) are designed for generating the sinusoidal excitation with different magnitude.

2. Permanently excited synchronous machine according to claim 1,
**characterised in that** the permanent magnetic poles (14) arranged next to one another of the at least one permanent magnetic pole (12) are designed for generating the sinusoidal excitation with an outer contour sinusoidal in cross section.

3. Permanently excited synchronous machine according to claim 1 or 2,
**characterised in that** the at least one permanent magnetic pole (12) is designed with four to six individual permanent magnetic segments (14).

4. Permanently exited synchronous machine according to claim 1,
**characterised in that** the permanent magnetic segments (14) of the at least one permanent magnetic pole (12) cover, at the circumference of the rotor (10), only a region of between 70% and 95% of the circumferential distance resulting by the pole division for this permanent magnetic pole (12).

5. Permanently excited synchronous machine according to one of claims 1 to 4,
**characterised in that** the permanent magnetic segments (14) of the at least one permanent magnetic pole (12) are fixedly attached on a mounting plate (20), which for its part is fixedly connected to the rotor (10).

6. Permanently excited synchronous machine according to claim 5,
**characterised in that** the mounting plate (20) is adhesively bonded on the rotor (10).

7. Permanently excited synchronous machine according to one of claims 1 to 6,
**characterised in that** the permanent magnetic segments (14) of the at least one permanent magnetic pole (12) are covered at the outside.

8. Permanently excited synchronous machine according to one of claims 1 to 7,
**characterised in that** the permanent magnetic segments (14) of the at least one permanent magnetic pole (12) are bonded to the rotor (10), in particular to the mounting plate (20).

9. Permanently excited synchronous machine according to one of claims 1 to 8,
**characterised in that** at the circumference of stator and rotor (10) as many electromagnetic poles or as many permanent magnetic poles (12) are formed such that they cannot have a common divider.

## Revendications

1. Machine synchrone à excitation permanente comprenant un stator avec une pluralité de pôles électromagnétiques et un rotor (10) avec plusieurs pôles à aimant permanent (12) ;
au moins un des pôles à aimant permanent (12) du rotor (10) étant formé de segments d'aimant permanent (14) séparés pourvus lors de leur fabrication d'une intensité de champ particulièrement élevée et disposés côte à côte au niveau de l'au moins un pôle à aimant permanent (12) dans la direction périphérique de telle sorte qu'en cas de rotation du rotor (10), une excitation de forme sinusoïdale apparaisse dans les pôles électromagnétiques du stator ;
**caractérisée en ce que** les segments d'aimant permanent (14) disposés côte à côte de l'au moins un pôle à aimant permanent (12) sont réalisés avec des tailles différentes pour produire l'excitation de forme sinusoïdale.

2. Machine synchrone à excitation permanente selon la revendication 1, **caractérisée en ce que** les segments d'aimant permanent (14) disposés côte à côte de l'au moins un pôle à aimant permanent (12) sont réalisés avec un contour extérieur de forme sinusoïdale en section transversale pour produire l'excitation de forme sinusoïdale.

3. Machine synchrone à excitation permanente selon la revendication 1 ou 2, **caractérisée en ce que** l'au moins un pôle à aimant permanent (12) est réalisé avec quatre à six segments d'aimant permanent (14) individuels.

4. Machine synchrone à excitation permanente selon la revendication 1, **caractérisée en ce que** les segments d'aimant permanent (14) de l'au moins un pôle à aimant permanent (12) se chevauchent au niveau de la périphérie du rotor (10) seulement sur une zone comprise entre 70 % et 95 % de la périphérie résultant de la séparation de pôle de ce pôle à aimant permanent (12).

5. Machine synchrone à excitation permanente selon l'une quelconque des revendications 1 à 4, **caractérisée en ce que** les segments d'aimant permanent (14) de l'au moins un pôle à aimant permanent (12) sont disposés de façon fixe sur place sur une plaque de montage (20) reliée pour sa part de façon fixe sur place au rotor (10).

6. Machine synchrone à excitation permanente selon la revendication 5, **caractérisée en ce que** la plaque de montage (20) est collée contre le rotor (10).

7. Machine synchrone à excitation permanente selon l'une quelconque des revendications 1 à 6, **caractérisée en ce que** les segments d'aimant permanent (14) de l'au moins un pôle à aimant permanent (12) sont recouverts du côté extérieur.

8. Machine synchrone à excitation permanente selon l'une quelconque des revendications 1 à 7, **caractérisée en ce que** les segments d'aimant permanent (14) de l'au moins un pôle à aimant permanent (12) sont collés sur le rotor (10), notamment au niveau de la plaque de montage (20).

9. Machine synchrone à excitation permanente selon l'une quelconque des revendications 1 à 8, **caractérisée en ce que** de nombreux pôles électromagnétiques et/ou de nombreux pôles à aimant permanent (12) sont réalisés au niveau de la périphérie du stator et du rotor (10) de telle sorte que ceux-ci n'aient pas de séparateur commun.
